Europäisches Patentamt

European Patent Office

Office européen des brevets

(19)

(11) Publication number: **0 115 096**

**A1**

(12) **EUROPEAN PATENT APPLICATION**

(21) Application number: **83201754.5**

(22) Date of filing: **13.12.83**

(51) Int. Cl.³: **E 03 D 9/02**
**C 02 F 1/76**

(30) Priority: **23.12.82 US 452545**

(43) Date of publication of application:
**08.08.84 Bulletin 84/32**

(84) Designated Contracting States:
**BE DE FR GB IT NL**

(71) Applicant: **THE PROCTER & GAMBLE COMPANY**
**301 East Sixth Street**
**Cincinnati Ohio 45202(US)**

(72) Inventor: **Wong, Louis Fay**
**9868 Bobwhite Place**
**Mason Ohio 45040 Warren County(US)**

(74) Representative: **Ernst, Hubert et al,**
**PROCTER & GAMBLE EUROPEAN TECHNICAL CENTER**
**Temselaan 100**
**B-1820 Strombeek-Bever(BE)**

(54) Particle retaining means for bleach cake in passive dosing dispenser.

(57) An article for sanitizing toilets comprising a dosing dispenser containing a calcium hypochlorite cake (22) composition characterized in that the article has a filter means (1) to retain particles which separate from the cake (22). The particle retaining means (1) is preferably a water-permeable filter sleeve which envelopes the cake.

-1-

## PARTICLE RETAINING MEANS FOR BLEACH CAKE IN PASSIVE DOSING DISPENSER

Louis F. Wong

### TECHNICAL FIELD

This invention relates to disinfecting devices adapted to dispense disinfectant solutions to the tank of a conventional toilet when it is flushed.

### BACKGROUND ART

The following references will serve as background art for dosing dispensers and cakes of active ingredients used in combination therewith, and are incorporated herein by reference:

U.S. Pat. No. 4,171,546, Dirksing, issued Oct. 23, 1979;

U.S. Pat. No. 4,208,747, Dirksing, issued June 24, 1980;

U.S. Pat. No. 4,186,856, Dirksing, issued Feb. 5, 1980;

U.S. Pat. No. 4,216,027, Wages, issued August 5, 1980;

U.S. Pat. No. 4,200,606, Kitko, issued April 29, 1980;

U.S. Pat. No. 4,248,827, Kitko, issued Feb. 3, 1981;

U.S. Pat. No. 4,253,951, McCune, issued March 3, 1981;

U.S. Pat. No. 4,246,129, Kacher, issued Jan. 20, 1981;

U.S. Pat. No. 4,251,012, Williams, issued Feb. 17, 1981;

U.S. Pat. No. 4,247,070, Dirksing, issued Jan. 27, 1981;

U.S. Pat. No. 4,302,350, Callicott, issued Nov. 24, 1981;

U.S. Pat. No. 4,281,421, Nyquist et al., issued Aug. 4, 1981;

U.S. Pat. No. 4,283,300, Kurtz, issued Aug. 11, 1981;

British Pat.Application No.2.116.040, Mueller et al., published September 21, 1983; and al.,

European Pat. Appln.0,005,286,Nyquist, published November 14, 1979.

U.S. Pat. No. 3,154,495, Robson et al., issued October 22, 1964, discloses articles comprising enveloped granular and small tableted hypochlorite materials.

A partially dissolving cake is disclosed in commonly owned U.S. Pat. No. 4,281,421, Nyquist, Kitko and Stradling, issued August 4, 1981. The Nyquist et al. patent is directed to a partially insoluble cake comprising hypochlorite and metasilicate salts. One drawback to these cakes is that much of the hypochlorite is wasted. All of the cake is not immersed in liquid; just the lower part, and "leaching" will not dissolve the active located in the top part of the cake. Another drawback is substantial nonuniform delivery of the active.

U.S. Pat. No. 4,208,747, Dirksing, issued June 24, 1980, discloses highly effective dispensers which are placed in a toilet tank and which receive a dose volume of water from the toilet tank and dispense a dose volume of a solution of cleaning or disinfecting composition every time the toilet is flushed. This patent teaches that cake compositions can be used as the source of cleaning and disinfecting agents in such dispensers, but fails to address specific problems posed by certain types of cakes. One problem is that a cake of calcium hypochlorite material immersed completely in the dosing liquid tends to initially deliver excessively high levels of chlorine. Thus, the chlorine is used up too fast. Figs. 9-14 and 18 of U.S. Pat. No. 4,208,747, Dirksing, disclose "top-feed" dispensers in which such cakes are completely immersed in the dosing liquid. There, the solution is drawn from above the cake. Such cake/dispenser combinations do not deliver a consistent amount of available chlorine over the life of the cake.

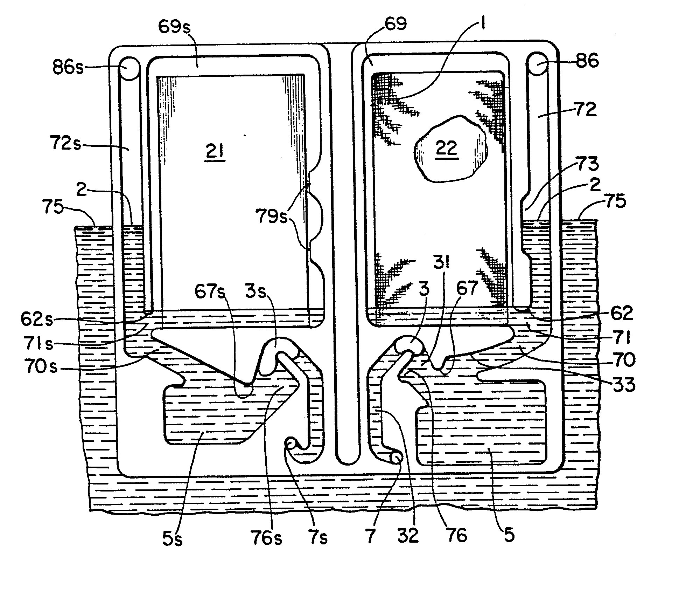

Dirksing also discloses a dosing dispenser of the "bottom-feed" type illustrated in Figs. 1-8 and 15-17. Symmetrical rectangular-shaped cakes are used therein. In such dispensers the bleach cake is only partially immersed in dosing liquid in the reservoir. The solution is drawn from an area near the bottom of the cake.

U.S. Pat. No. 4,307,474, Choy, issued December 29, 1981, discloses a passive dosing dispenser exhibiting improved resistance to gel clogging. An anti-clogging means comprising support means in the lowermost portion of the product chamber (cake compartment) and a level control means to control the level of liquid in the product chamber are also disclosed. The support means help to prevent gelled and solid chips from obstructing the flow of liquid in and out of the chamber.

Some major problems in this art have been with dissolving bleach cakes. One is dispensing even concentrations of the bleach. One cause of this is that particles from said cakes pass into the reservoir of the dispenser and thereby reduce the effective volume of liquid which is needed for rapid equilibrium and formation of the dosage of bleach which is to be dispensed in the next flush of the toilet. Further, the particles which break off the cake and pass through to the toilet water result in a loss of efficient bleach use, and some of the particles may clog the passageways through which liquid flows from the dispenser. Another problem has been that most of the effective volume of bleach liquid in the reservoir was dispensed with each dose.

## SUMMARY OF THE INVENTION

The present invention is a passive dosing dispenser having a particle retaining filter means for particles which separate from the cake. The dispenser contains a reservoir with a compartment housing the cake. The bleach cake is preferably a calcium hypochlorite base cake, which is gradually depleted as doses of water are routed through the dispenser. Each dose of water contacts a lower portion of the cake and a dose of hypochlorite solution is formed for release at a later time. The invention is characterized in that the dispenser has a filter means to retain cake particles which separate from the cake. A preferred filter means is a filter sleeve which envelopes the cake. A preferred filter sleeve is made of water-permeable laid hypochlorite-resistant fibers selected from the group consisting of nylon, polyester and other suitable material.

An object of the present invention is to provide a dispenser and cake combination which delivers all of the available chlorine in the cake at a substantially uniform rate, over a long period of time, throughout the life of the dispenser. Another object is to provide a dispenser which does not clog up.

Other objects of the present invention will be apparent in the light of the following disclosure.

## BRIEF DESCRIPTION OF THE DRAWING

Shown is a schematic view of twin passive dosing dispenser with isolated surfactant cake 21 and isolated bleach cake 22. The bleach cake 22 is enveloped in a filter sleeve particle retaining means 1.

## DETAILED DESCRIPTION OF THE INVENTION

The essence of the invention is a dosing dispenser device containing a soluble, solid bleach cake and having a filter means to retain particles which separate from the cake. A preferred filter means is a filter sleeve of water-permeable laid fibers which envelopes a calcium hypochlorite based bleach cake, which cake weighs 45 to 120 gms and has a density of 1.3 to 2.3 gms/cc.

### The Particle Retaining Filter Means

The particle retaining filter means can take many forms including a cup containing the cake, a filter sleeve on the cake, and a screen on the bottom of the cake compartment 69. The filter means of this invention retains particles of 150 microns and above.

Preferably the filter means is an envelope or sleeve made of water-permeable laid hypochlorite-resistant fibers selected from the group consisting of nylon, polyethylene, polypropylene, polyethylene terephthalate, acrylonitrile, acrylonitrile copolymers, polyvinyl chloride-acetate, polymethyl methacrylate, polyvinylidene chloride, asbestos, glass and mixtures thereof in which 40% to 100% of said fibers are thermoplastic, said laid fibers having a porosity from 200 to 800 cfm/sq.ft.; and preferably from 200 to 650 cfm/sq.ft. The preferred filter means has a porosity of about 400 to 600 and is made from a substrate of commercially available polyester. Examples of suitable ones are DELNET[R], KENDAL[R], and Santara[R]. Glass wool can also be used as a filter means in the practice of this invention.

The filter sleeve 1 on bleach cake 22 is preferably made of NOVANET[R] Stock 149-505, which is a porous thermoplastic hypochlorite resistant net material comprising uniformly spaced solid thick thermoplastic masses connected by oriented thermoplastic strands which are thinner than the solid masses. Such net materials are sold by Kendal Co.

The dosing dispenser is placed into the water tank of a toilet. The dispenser has means for passively receiving a dose volume of water from the tank. U.S. Pat. No. 4,208,747, Dirksing, issued June 24, 1980; U.S. Pat. No. 4,305,162, Cornelisse, Jr., et al., issued December 15, 1981; and European Patent Application N°_____ , Applicant's reference Case 3089, Dirksing et al., for "Article and Method for Maintaining More Even Concentrations of Bleach in a Passive Dosing Dispenser", filed of even date; are all incorporated herein by reference for their teachings on passive dosing dispensers, their preparation and operation.

## DETAILED DESCRIPTION OF THE DRAWING

It will be noted that dual dispensers are shown in the drawings. The surfactant cake 21 is isolated from the bleach cake 22. The dual dispensers are similar. Corresponding element numbers for the surfactant side are designated "S". Both dispensers have: vent holes 86, vent tubes 72, cake compartments 69, outlets 71, baffles 67, passageways 70, bubble lock 3, air trap 76, reservoirs 5, and exit ports 7. The bleach cake vent tube 72 has a bulb 73.

The surfactant side has protrusion 79S to steady the cake. The baffle means must be designed to limit the size of the air lock bubble. The bubble 3 must be small enough to allow the dose volume of liquid above the baffle 67 to be discharged.

Note that inlet/outlet exit port 7 leads to first inlet/outlet passage way 32, which is in fluid communication with the bubble lock 3, which is in fluid communication with second inlet/outlet passageway 31 on the internal reservoir 5 side. Incline 33 of passageway 70 is sufficiently steep to shear excess air and vent same during refill. Passageway 70 leads to cake compartment 69 and vent tube 72.

The present invention is understood more clearly in the light of this disclosure and commonly owned U.S. Pat. No. 4,305,162, to Cornelisse, Jr., et al., issued December 15, 1981, for "Passive Dosing Dispenser Enveloping Captive Air Bubble to Provide Product Isolation," incorporated herein by reference.

The reservoir section 5 below baffle 67 for the bleach cake preferably holds about 8 mls. It can hold from about 6 mls to about 12 mls. The amount of liquid in the dispenser above baffle 67 is about 1 ml to about 4 mls. This is equal to the dose volume for the bleach dispensed. The bubble lock 3 is smaller than 3S and baffle 67 is higher than 67S to thereby facilitate firing of a smaller doses while maintaining a 3:1 to 6:1 volumetric ratio of reservoir to dose volume.

The received water is routed to compartment 69 within the dispenser which contains the active. The dispenser has a lowermost edge 62 means for immersing only a lowermost portion of the cake to a predetermined depth in the received water to facilitate dissolving a portion of the cake for dispensing at a later time. The bleach cake in compartment 69 is enveloped in a filter sleeve means 1 which contains the cake 22 and retains cake particles which become detached from the cake during use. The filter sleeve 1 is an envelope of laid fibers. Alternatively, the filter means can be a water-permeable cup (not shown) which is formed to the configuration of cake and which contains the cake. The cup will be made of a hypochlorite resistant material which will be positioned in the bottom of the compartment 69.

The liquid in the compartment 69 is drawn out each time the dispenser is fired, responsive to the flushing of the toilet. The quantity of fluid subject to discharge during the flush cycle is preferably 2 mls and the volume of solution in the dispenser including reservoir 5 is preferably from 7 to 16 mls, with 6 to 12 mls of this being in reservoir 5.

When the toilet is flushed, the external water level 75 in the toilet tank drops, causing water level 2 to drop. The air bubble 3 moves out exit port 7. The volume of liquid above baffle 67 is released from the dispenser. As soon as the liquid level falls from level 2 to the baffle 67, the discharge action is terminated. None of the liquid volume below baffle 67 will be discharged. The same applies for the surfactant side.

The reservoir section 5 holds from about 6 mls up to about 12 mls; this volume of liquid insures that the concentration of bleach to be fired on the next flush will be potent in a rapid flush situation.

For the surfactant side, the reservoir section 5S preferably holds about 10 to about 12 mls. The dose volume for the surfactant solution is preferably about 5 mls, which is larger than the bleach dose.

### The Surfactant Cake

Preferred surfactant cake compositions are disclosed in the U.S. Patent Application of Wong, Sterling and Borcher, for "Buffered Alkali Earth Metal Surfactant Cakes for Dosing Dispenser," incorporated herein by reference.

The dimensions of a preferred bleach cake compartment 69 are about 9.1 cms x 5.0 cms x 2.2 cms. The dimensions of a preferred bleach cake 21 are 8.4 cms x 4.1 cms x 1.9 cms. The cake is sized to initially occupy most of the cake compartment space within the dispenser reservoir. The cake and the cake compartment preferably have cake surfaces and vertical compartment walls which are parallel to each other. It is important that there is at least 0.4 cm to 4 cms of free space between the vertical cake surfaces and the cake compartment walls. Some preferred free spaces are from 0.4 cm to 4 cms, 0.5 cm to 1.5 cms, and 0.5 cm to 2 cms.

The dispenser retains the hypochlorite solution in substantial isolation from the body of toilet tank water during quiescent periods in between flushes. Upon flushing of the toilet, an available chlorine level of from about 2 parts per million (ppm) to about 10 ppm is established in the toilet bowl water. The hypochlorite solution formed in the dispenser reservoir generally contains from about 0.5% to about 15% available chlorine. The average concentration of available chlorine there is typically from 9% to 15% and preferably 10% to 11%.

The solid cake is formulated to slowly dissolve and "gravity feed" into the water in the cake compartment 69 of the dispenser and disappear after the toilet has been flushed a sufficient number of times to exhaust all of the hypochlorite in the cake. It is important, for a more uniform delivery of bleach, that the dispenser has a means to maintain in the reservoir section 9 a volume of aqueous liquid of about 6 mls to about 12 mls. The dispensed dose volume should be about 1/3 to about 1/6 of the reservoir volume. Again, the idea is to deliver about 1 ml to about 4 mls, preferably about 1.5 to 3 mls of concentrated hypochlorite solution. This is accomplished by adjusting the elements of the dispenser shown in the drawings. It is important to design the elements of the dispenser so that the complete intended doses will discharge.

### The Bleach Cake

The calcium hypochlorite cake of this invention is preferably a tableted solid composition comprising: (I) from about 10% to about 98% of a substantially stable calcium hypochlorite; (II) an effective amount of a water-soluble calcium hypochlorite cake swelling control salt selected from the group consisting of lithium hypochlorite material (Form 2$^R$), lithium hydroxide, lithium sulfate, lithium chloride and other water-soluble lithium salts, and mixtures thereof; and (III) the balance being a mixture of salts and other by-product materials normal to the manufacture of calcium hypochlorite. See the examples for preferred compositions.

### Bleach Cake Preparation

The compacted solid calcium hypochlorite cake compositions of this invention may be prepared by conventional compacting procedure. For example, granules of calcium hypochlorite, e.g., HTH$^R$, and granules of the selected swelling control salts are mixed together, and this mixture is then pressed into a cake with a compacting machine. The granules are generally in a size range of from about 50 microns to about 1,000 microns prior to compacting. The compacted solids can also be formed by tabletting, "slugging," Chilsonating, or otherwise converting the granular hypochlorite mixture into compacted forms. Compacting

- 9 -

may be accomplished at pressures of from about 0.5 tons/square inch to about 200 tons/square inch, preferably from about 1.0 tons/square inch to about 50 tons/square inch to about 5.0 tons/-square inch. The compacting can be done on any conventional compacting apparatus, e.g., a Stokes Model R4 Tablet Press. The compacted cakes generally have a specific gravity of about 1.3 to about 2.3, preferably from about 1.5 to about 2.0. The cakes weigh from 45 gm to 120 gm. A preferred cake is disclosed in commonly owned British Patent Application N° 2.116.040, J. M. Mueller and L. E. Small, published September 21, 1983, incorporated herein by reference in its entirety.

The cake is formed into shapes with dimensions appropriate to fit the cake compartment of the gravity feed dosing dispenser which holds the cake.

## EXAMPLE I

A preferred bleach cake with a particle retaining filter sleeve completely enveloping the cake has the following make up:

Formulation

| HTH [$Ca(OCl)_2$] | 92% |
| $Li_2SO_4$–Monohydrate | 8% |

Dimensions & Physical Properties

| Length | 3.3" = 8.38 cm |
| Width | 1.61" = 4.09 cm |
| Thickness | 0.76" = 1.93 cm |
| Weight | 110 g |
| Density | 1.76 g/cc |
| Grams of $AvCl_2$ | 70 g |

Filter Sleeve Material

Nonwoven Polyester (Kendall Corp.), Style #149-505

| Length | 3.5" = 8.89 cm |
| Width | 2.5" = 6.35 cm |
| Thickness | 0.010" = 0.03 cm |
| Porosity | 227 cfm/ft² = 69.2 m³ per min/m² |
| Weight | 40 g/sq.yd. = 47.8 gm/m² |

## EXAMPLE II

Another bleach cake is made with 95% HTH and 5% lithium sulfate anhydrous. It is also used in a filter sleeve like the one described above and shown in the drawing.

Dispensers equipped with the cakes of Examples I and II operated without dispenser clogging and withheld particles from the bleach cake passing through the dispenser into the toilet tank water or clogging up the dispenser.

CLAIMS

1. An article of manufacture comprising a dosing dispenser containing a solid cake of water-soluble calcium hypochlorite within a cake compartment in the dispenser, said dispenser including means for allowing a dose volume of aqueous liquid to be routed through a reservoir within said dispenser and into said compartment with each dispensing cycle, the lowermost portion of the cake being immersed to a predetermined depth in said aqueous in said compartment liquid to facilitate dissolving a portion of said cake for dispensing at a later time; said cake being substantially completely water-soluble; said cake weighing from 45 gms to 120 gms and having a specific gravity of from 1.5 to 2.3; said compartment containing sufficient free space to allow the cake to gravity feed by dissolution into said aqueous liquid: CHARACTERIZED IN THAT:

said dispenser contains a water-permeable particle retaining filter means to contain said solid cake and to retain cake particles which separate from the cake, said particle retaining filter means having pores small enough to retain said separated particles.

2. The invention of Claim 1 wherein said particle retaining filter means is an envelope of water-permeable laid hypochlorite-resistant material selected from the group consisting of nylon, polyethylene, polypropylene, polyethylene terephthalate, acrylonitrile, acrylonitrile copolymers, polyvinyl chloride-acetate, polymethyl methacrylate, polyvinylidene chloride, asbestos, glass and mixtures thereof in which 40% to 100% of said fibers are_ thermoplastic, said laid fibers having a porosity from 200 to 800 cfm/sq.ft.

3. The invention of Claim 2 wherein said porosity is from 200 to 650 cfm/sq.ft. (about 61 to about 198 $M^3$ per min/$M^2$).

4. The invention of Claim 3 wherein said porosity is 400 to 600 cfm/sq.ft. (about 122 to about 183 $M^3$ per min/$M^2$).

5. A bleach for a dosing dispenser comprising a soluble solid cake of hypochlorite bleach contained in a particle retaining filter means, said cake weighing from 45 to 120 gms and having a specific gravity of from 1.5 to 2.3, said filter means comprising a sleeve of water-permeable laid hypochlorite-resistant fibers selected from the group consisting of nylon, polyethylene, polypropylene, polyethylene terephthalate, acrylonitrile, acrylonitrile copolymers, polyvinyl chloride-acetate, polymethyl methacrylate, polyvinylidene chloride, asbestos, glass and mixtures thereof in which 40% to 100% of said fibers are thermoplastic, said laid fibers having a porosity of 200 to 800 cfm/sq.ft. (about 61 to about 244 $M^3$ per min/$M^2$).

6. The invention of Claim 5 wherein said porosity is from 200 to 650 cfm/sq.ft. (about 61 to about 198 $M^3$ per min/$M^2$).

7. The invention of Claim 5 wherein said porosity is 400 to 600.

8. An article of manufacture comprising a dosing dispenser containing a solid cake of water-soluble calcium hypochlorite within a cake compartment, said dispenser including means for allowing a dose volume of aqueous liquid to be routed through a reservoir and into said compartment with each dispensing cycle and means for immersing a lowermost portion of the cake to a predetermined depth in said aqueous liquid to facilitate dissolving a portion of said cake for dispensing at a later time; said cake being substantially completely water-soluble; said cake weighing from 45 gms to 120 gms and having a specific gravity of from 1.5 to 2.3; said cake compartment containing sufficient free space to allow the cake to gravity feed by dissolution into said aqueous liquid: CHARACTERIZED IN THAT:

said cake compartment has a water-permeable particle retaining filter means cup to contain said solid cake and cake particles which detach therefrom and to insure unobstructed dispenser functionality and efficiency, said particle retaining

- 3 -

0115096

filter means having pores small enough to retain particles of 150 microns and above.

9. The invention of Claim 8 wherein said particle retaining filter means cup is a water-permeable hypochlorite-resistant material selected from the group consisting of nylon, polyethylene, polypropylene, polyethylene terephthalate, acrylonitrile, acrylonitrile copolymers, polyvinyl chloride-acetate, polymethyl methacrylate, polyvinylidene chloride, asbestos, glass and mixtures thereof in which 40% to 100% of said material is thermoplastic, said cup having a porosity from 200 to 800 cfm/sq.ft. (about 61 to about 244 $M^3$ per min/$M^2$).

10. The invention of Claim 9 wherein said porosity is from 200 to 650 cfm/sq.ft. (about 61 to about 198 $M^3$ per min/$M^2$).

11. The invention of Claim 10 wherein said porosity is 400 to 600 cfm/sq.ft. (about 122 to about 183 $M^3$ per min/$M^2$).

12. A bleach for a dosing dispenser comprising a soluble solid cake of hypochlorite bleach contained in a particle retaining filter means, said cake weighing from 45 to 120 gms and having a specific gravity of from 1.5 to 2.3, said filter means comprising water-permeable glass wood having a porosity of 200 to 800 cfm/sq.ft. positioned under said cake.

LW/rmj(A/106)

1/1

0115096

Application number

EP 83 20 1754

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 778 849 (FOLEY)<br>* Column 2, lines 4-19; figure 1 * | 1,8 | E 03 D 9/02<br>C 02 F 1/76 |
| Y | US-A-3 772 193 (NELLI)<br>* Column 3, lines 3-47; figure 1 * | 1 | |
| A,P | US-A-4 382 304 (LEHMANN)<br>* Column 7, lines 55-60; figure 10 * | 1 | |
| A | US-A-3 839 202 (ROY)<br>* Column 8, lines 3-8 * | 1,2,5, 8,9 | |
| A,D | US-A-4 281 421 (NYQUIST)<br>* Whole document * | 1,8 | TECHNICAL FIELDS SEARCHED (Int. Cl. ³) |
| A,D | US-A-4 208 747 (DIRKSING) | | E 03 D<br>C 02 F |
| A,D | US-A-4 307 474 (CHOY) | | |

-----

The present search report has been drawn up for all claims

| Place of search | Date of completion of the search | Examiner |
|---|---|---|
| THE HAGUE | 09-04-1984 | HANNAART J.P. |